# EUROPEAN PATENT APPLICATION

(11) **EP 1 933 519 A1**
(43) Date of publication of application: **18.06.2008**
(21) Application number: 06025627.8
(22) Date of filing: 12.12.2006
(51) Int. Cl.: H04L 29/06, H04L 29/12

(54) **Streaming media service for mobile telephones**

(71) Applicant: Koninklijke KPN N.V., 2516 CK The Hague (NL)
(72) Inventor: Minnen, Robert Mark Martijn, 6951 BZ Dieren (NL)
(74) Representative: Wuyts, Koenraad Maria

(57) **Abstract**

A mobile client (104) on a private network (106) sends a request for receiving streamed media from a server (110,112) on a public network such as the Internet (108). The private network has a firewall (118). The private network has a router (116) that routes requests for streaming media to an application layer gateway (120) on the private network. The application layer gateway takes care of the NAT and security issues. Owing to this configuration, the mobile clients need not be re-configured when used for receiving streaming media.

## Description

### FIELD OF THE INVENTION

The invention relates to a method of providing a service to a mobile client, e.g., a mobile telephone, in a private data network for communicating content via streaming, e.g., over a public data network. The invention also relates to a data processing system comprising a private data network for enabling a mobile client to communicate content via streaming, e.g., over a public data network.

### BACKGROUND ART

Typically, mobile devices (especially mobile telephones) that want to stream content use the protocol RTSP ("Real Time Streaming Protocol"), adopted by 3GPP ("3rd Generation Partnership Project": an international collaboration agreement). The Project focuses on a globally applicable third generation mobile phone system specification based on the UMTS ("Universal Mobile Telecommunications System").

According to 3GPP a media player should support RTP ("Real Time Protocol" at the application layer of the Internet Protocol suite) over UDP/IP ("User Datagram Protocol" at the transport layer /Internet Protocol at the network layer) for the transport of media. The encoded media is encapsulated in the RTP packets with media specific RTP payload formats. RTP payload formats are defined by the IETF ("Internet Engineering Task Force"). RTP also provides a protocol called RTCP ("Real Time Control Protocol") for feedback about the quality of the transmission service provided by RTP.

In order to support streaming, a mobile device, such as a mobile phone, needs to support RTP/UDP/IP protocols for the transport of continuous media (e.g., speech, audio and video).

To support RTSP/RTP data transport, information technology devices such as firewalls, need to allow the media streams to pass through. During the set-up of a session, specific ports are negotiated between client and server. The firewall device needs to inspect this negotiation and open the negotiated ports. Additional complexity is added when the firewall device also needs to execute NAT ("Network Address Translation"). NAT is the process of re-writing the source address and port number and/or the destination address and port number of IP packets as they pass through the firewall. NAT is commonly used to enable multiple hosts on a private network to access the Internet using a single public IP address. Only a few devices support the combination of RTSP/RTP and NAT. This problem is often referred to as the RTSP NAT traversal problem.

An alternative to RTSP/RTP streaming is HTTP ("Hypertext Transfer Protocol") streaming, but this is not yet widely supported on most mobile devices, especially not on mobile phones. However, most players in the PC ("personal computer") environment do support both transport mechanisms.

Networks may allocate private IP addresses to their customers. These private IP addresses are then NAT-translated to a few public IP addresses, a process also known a PAT ("Port Address Translation", or many to one/few NAT). These networks should be able to support RTSP/RTP streaming in combination with NAT to enable mobile devices to stream content.

NAT causes discontinuity in address realms. As a result, a protocol such as RTSP needs to try to make sure that it can deal with discontinuities caused by NAT. The problem with RTSP is that, being a media control protocol that manages one or more media streams, RTSP carries information about network addresses and ports inside itself. Because of this, even if RTSP itself, when carried over e.g., TCP ("Transmission Control Protocol", one of the core protocols of the Internet protocol suite), is not blocked by NAT, its media streams may be blocked by NAT, unless special provisions are added to support NAT-traversal.

### SUMMARY OF THE INVENTION

There exist several solutions to the RTSP NAT traversal problem that are implemented on some home routers, and some commercial firewall- and router-products. These systems can solve the problem without the need of changing settings on the client device.

Another solution is using an RTSP-proxy. Typically, the user needs to configure this proxy on the client device, so that the client device knows it needs to use a proxy to connect to a streaming media server.

The RTSP NAT traversal problem is especially relevant to mobile devices within the consumer electronics domain such as mobile phones. A very small minority of the users will be able to configure their mobile phone so that it operates flawlessly in the communication with any of multiple destinations in order to receive streaming media. In addition, a mobile device has a small form factor and a matching user interface (UI) that is optimized for operational use of the device. As a result, configuring the device through its Ul can be an ordeal.

It is an object of the invention to relieve the consumer from having to configure his/her mobile device.

The inventor therefore proposes a method of providing, to a mobile client in a private data network, a service for communicating content via streaming between the mobile client and a server. The method comprises receiving from the mobile client a request for streaming the content; translating a private address of the mobile client to a public address and forwarding the request with the public address to a server. The address translation and port control is now being carried out by the service provider, e.g., the same party that manages the private network.

The inventor also proposes a data processing system that has a private data network for enabling to communicate content via streaming between a mobile client and a server. The system comprises an application layer gateway that is operative to receive from the mobile client a request for streaming content, to translate a private address of the mobile client to a public address, and to forward the request with the public address to the server. The address translation and port control is now delegated to the ALG residing on the private network but external to the mobile device. The ALG is governed by the provider of the private network. This approach has great benefits for the user of the mobile device, as the address translation and port control is performed external to the mobile device, as a result of which the mobile client need not be reconfigured.

Preferably, the system comprises a router for routing the request from the mobile client to the ALG, the ALG being located in a demilitarized zone (126) of the private network. Data traffic other than that associated with receiving streaming media is not routed to the ALG and may go through the firewall or to a content server within the domain protected by the firewall.

Further embodiments of the invention are being addressed in the other dependent claims.

### BRIEF DESCRIPTION OF THE DRAWING

The invention is explained in further detail, by way of example and with reference to the accompanying drawing, wherein:
Fig.1 is a diagram of a system in the invention; and
Fig.2 is a process diagram illustrating aspects if the system in Fig.1.

Throughout the Figures, similar or corresponding features are indicated by same reference numerals.

### DETAILED EMBODIMENTS

When an RTSP connection is to be set up, the client sends information regarding the ports on which it is going to listen for the streaming data. The server receives that information and sends in return information about its ports on which the server is going to send the streaming data. If there is a firewall between the client and the server with NAT enabled, an ALG is required as it translates through the NAT procedure the client port information and stores it to open the dynamic connections at which the streaming data is expected. If NAT is not enabled in the firewall, then more ports have to be opened on which the dynamic traffic is expected. Note that the client ports and server ports involved in the streaming are dynamic.

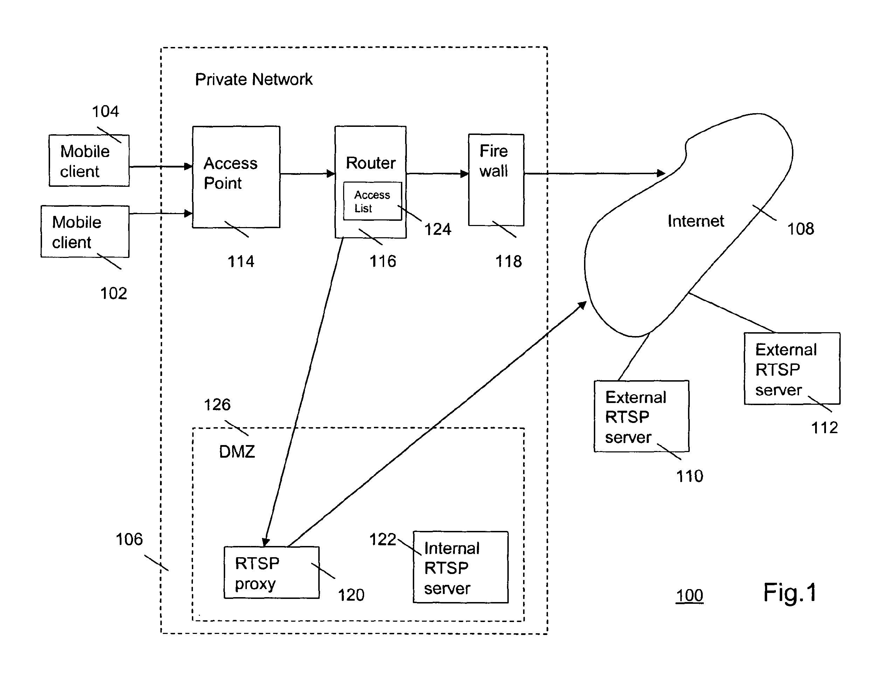

Fig.1 is a block diagram of a system 100 according to the invention. System 100 comprises mobile clients 102 and 104 that communicate via a private network 106 and a public network 108, e.g., the Internet, with public streaming servers 110 and 112. The operator of private network 106 has allocated private network addresses to clients 102 and 104. These private addresses and private port numbers are to be translated into public network addresses and public port numbers, a process referred to above as NAT, for being used on public network 108. As already mentioned NAT gives rise to discontinuities in address realms that may hamper the protocols involved in the communication between clients 102 and 104 on the one hand, and servers 110 and 112 on the other hand. The problems arise if data sent by server 110 or 112 cannot readily be correlated to the proper one of clients 102 and 104.

Private network 106 comprises an access point 114 for wireless communication with clients 102 and 104, and a router 116. Private network 106 further comprises a firewall 118, a streaming proxy 120 and, optionally, an internal streaming server 122.

Functionally, firewall 118 is a set of rules that filter the data packets arriving at router 116. If a packet does not meet the criteria specified by the rules, it is dropped. If it does meet the criteria, it is allowed to pass through.

Router 116 serves to forward data packets to their destinations. Router 116 is configured to selectively route data packets, received via access point 114 and involved in a request from client 102 or 104 for streaming content, to streaming proxy server 120. Other data packets are routed through firewall 118 to their destination on the Internet. The selective routing can be implemented using an Access Control List (ACL) 124. Standard Access Control Lists (ACL) are IOS-based commands for filtering packets based on their source IP address. Extended Access Control Lists have the ability to filter packets based on source and destination IP addresses. The IOS (Internetwork Operating System) is the operating system of Cisco Systems routers. It is a multi-tasking operating system and provides kernel services, such as process scheduling as well as the command line interface and routing software. In an embodiment of the invention, router 116 is a source-based router and routes all data on port 554 to proxy 120.

Port 554 is the default port for establishing the RSTP communication to a streaming server. The communication on port 554 is used for the negotiation of the RTP and RTCP connections and ports. The RTSP communication on port 554 is command-based and controls the media streams. In principle, router 116 can be configured to listen on different ports for streaming requests, but port 554 is commonly used for this purpose. Based on the port number, router 116 intercepts the RTSP communication at the initial set-up, and then forwards the data packets to proxy 120. Proxy 120 then sets up the connection with server 110 or 112 or with server 122 on behalf of client 102 or 104. It is clear from the destination specified in request issued by client 102 or 104, with which one of servers 110, 112 or 122 the connection is to be made. The streaming media is communicated uni-directionally from server 110 (or 112) to client 102 or 104 via proxy 120 but without router 116 intervening.

Proxy 120 is functionally an application level gateway (ALG), also referred to as an application layer gateway. In general, an ALG provides additional security to a firewall or NAT device employed in a data network. The ALG allows legitimate application data to pass through the security checks of the firewall that would have otherwise restricted the traffic for not meeting its filtering criteria. An ALG allows client applications to use dynamic ephemeral TCP/ UDP ports (see below) to communicate with the known ports used by the server applications. A firewall-configuration may allow only a limited number of known ports. In the absence of an ALG, either the ports get blocked or the network administrator needs to explicitly open up a large number of ports in the firewall. This would render the network vulnerable to attacks on those ports. An ephemeral port is a TCP or UDP port number that is automatically allocated from a predefined range by the TCP/IP software stack, typically in order to provide the port for the client end of a client-server communication. The allocation is temporary and is valid for the duration of the connection opened by the application using the protocols. An ALG also converts the network layer address information found inside an application payload between the addresses acceptable by the hosts on either side of the firewall/NAT. An ALG allows traversal of the firewall with communication protocols that require the client's private address and/or communication ports to be specified. If the firewall has traffic associated with such protocols terminated on an ALG then the responsibility for permitting sessions passes from the firewall to the ALG. An ALG can solve the NAT traversal. Basically a NAT device with inbuilt ALG can re-write information within the messages and can hold address-bindings until the session terminates.

Preferably, proxy 120 is located within a DMZ ("demilitarized zone") 126. DMZ 126 is a buffer zone between the Internet 108, and private network 106. Putting proxy 120 as a public access server on a separate, isolated network provides an extra measure of security for private network 106. As an alternative, proxy 120 is positioned in the data path between access point 114 and firewall 118, so that router 116 can be dispensed with. A drawback of this alternative configuration is that all other data traffic, e.g., ftp, http, email, etc., is required to pass through proxy 120 as well. As a result, more processing capacity is needed at proxy 120 than in the DMZ scenario. On the other hand, it is not necessary anymore that data traffic be directed using ACL 124.

In an embodiment of the invention, the communication uses RTSP; firewall 118 comprises a Linux firewall; and ALG 120 uses netfilter in combination with rtsp_conntrack. Netfilter is a set of hooks within the Linux kernel for processing network packets. The rtsp_conntrack is a dedicated module for tracking RSTP connections. This embodiment is a specific implementation using publicly available building blocks. The Linux firewall netfilter can be patched with a special connection tracking module for RTSP (rtsp_conntrack written by Tom Marshall from RealNetworks, published under GPL license). Netfilter is the set of hooks within the Linux kernel for intercepting and manipulating network packets. A component on top of netfilter is the firewall which filters packets. The hooks are also used by a component which performs network address translation. The ALG adds application intelligence to the Firewall/NAT. The ALG performs the manipulation of the address translation on the protocol messages and dynamically controls the correct ports on the firewall for allowing the media streams.

The approach proposed by the inventor can also be used for protocols, other than RTSP, that are sensitive to NAT as well. Examples of such protocols are: H.323, Kerberos, X-Windows, remote shell, SIP (Session Initiation Protocol).

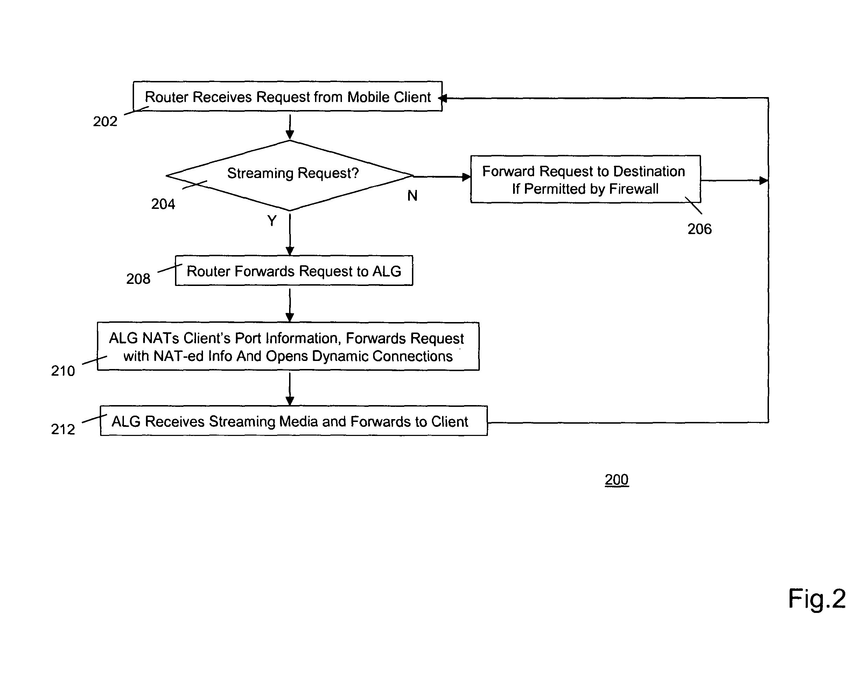

Fig.2 is a process diagram 200 illustrating operations in system 100. In a step 202, router 116 receives a request from client 102. In a step 204, router 116 decides whether or not the request is a request for streaming media. If the request is not for streaming media, router 116 routes in a step 206 the request to its destination if permitted by firewall 118 and the process returns to step 202 in order to await a next request arriving at router 116. If routing the request beyond firewall 116 is not permitted, the process likewise returns to step 202 for awaiting a next request. If the request is a request for streaming media, router 116 routes the request in a step 208 to proxy 120. In a step 210, proxy 120 translates the address and port information of client 102, and forwards the request with the translated address and port information to the relevant one of servers 110 and 112 on Internet 108. Proxy 120 then opens the dynamic connections for receiving the streaming media from the relevant one of servers 110 and 112. In a step 212 proxy 120 receives the streamed media from the relevant one of servers 110, 112 and 122, and forwards the streamed media to client 102.

## Claims

1. A method of providing to a mobile client (102, 104), in a private data network (106) with a firewall (118), a service for communicating content via streaming between the mobile client and a server (110; 112; 122), wherein the method comprises:
receiving (202) a data from the mobile client;
determining if the data relates to a request for streaming the content;
if the data relates to the request for streaming:
translating a private address of the mobile client to a public address; and
forwarding (210) the request with the public address to the server; and
if the data packet does not relate to the request for streaming:
forwarding the data to the firewall.

2. The method of claim 1, wherein the determining comprises using a router (116), and wherein the translating and the forwarding of the request comprise using an application level gateway (120).

3. The method of claim 1, wherein the translating and the forwarding of the request is carried out from a demilitarized zone (126) of the private network.

4. The method of claim 1, wherein the firewall comprises a Linux firewall, and wherein
the method comprises using RTSP for the communicating and using netfilter, which is a set of hooks within the Linux kernel for processing network packets, in combination with rtsp_conntrack, which is a dedicated module for tracking RSTP connections.

5. A data processing system (100) comprising a private data network (106) with a firewall, wherein:
the system is operative to receive a request from a mobile client (102, 104) for communicating content via streaming between the mobile client and a server (110; 112; 122);
the system comprises an application layer gateway (120) that is operative to:
translate a private address of the mobile client to a public address, and
forward the request with the public address to the server.

6. The system of claim 5, comprising a router (116) for routing data from the mobile client to the application layer gateway if the data relates to the request, and for routing the data to the firewall if the data does not relate to the request.

7. The system of claim 6, wherein the application layer gateway is located in a demilitarized zone (126) of the private network.

8. The system of claim 5, wherein:
the firewall comprises a Linux firewall; and
the application layer gateway uses netfilter, which is a set of hooks within the Linux kernel for processing network packets, in combination with rtsp_conntrack, which is a dedicated module for tracking RSTP connections.
